# EUROPEAN PATENT APPLICATION

(11) **EP 4 033 112 A1**
(43) Date of publication of application: **27.07.2022**
(21) Application number: 20866602.4
(22) Date of filing: 08.09.2020
(51) Int. Cl.: F16B 37/04

(54) **SWAGE NUT**

(30) Priority: 19.09.2019 JP 2019170686
(71) Applicant: Press Kogyo Co., Ltd., Kawasaki-shi, Kanagawa 210-8512 (JP)
(72) Inventor: KONDO Shigeki, Fujisawa-shi, Kanagawa 252-0816 (JP)
(74) Representative: Schaumburg und Partner Patentanwälte mbB
(86) International application number: PCT/JP2020/033985
(87) International publication number: WO 2021/054205

(57) **Abstract**

A crimp nut capable of preventing or restraining deformation of a screw hole of a nut portion is provided. A crimp nut 1 comprises a nut portion 2 having a screw hole 7, and a crimp portion 5 extending axially from an end surface 2a of the nut portion 2, wherein the crimp portion 5 is formed in a cylindrical shape and in a tapered shape whose outer circumference is reduced in diameter from a base end to a tip end, an outer peripheral side end surface 8 is formed on a crimp portion 5 side of the nut portion 2 which is located on an outer peripheral side of the crimp portion 5, an inner peripheral side end surface 9 is formed on the crimp portion 5 side of the nut portion 2 which is located on an inner peripheral side of the crimp portion 5, an outer rounded portion 10 having an arcuate cross section is formed on a base end portion of the crimp portion 5 to connect an outer peripheral surface 5a of the crimp portion 5 and the outer peripheral side end surface 8, an inner rounded portion 11 having an arcuate cross section is formed on the base end portion of the crimp portion 5 to connect an inner peripheral surface 5b of the crimp portion 5 and the inner peripheral side end surface 9, and a radius R1 of the outer rounded portion 10 is set larger than a radius R2 of the inner rounded portion 11.

## Description

### BACKGROUND

### Technical Field

The present disclosure relates to a crimp nut to be attached to a plate to be attached.

### Background Art

When a nut is attached to a plate formed by a middle or large thickness plate, the nut is generally attached by welding.

When welding the nut to the plate to be attached, a male screw of a set tool is screwed into a female screw of the nut, the nut is fixed to the plate to be attached, and then a part of the contact portion between the nut and the plate to be attached is welded.

Further, as a crimp nut attached to an end of a bolt hole, one described in Patent Literature (PTL) 1 is known. This crimp nut has a crimp portion that projects axially from an edge portion of a female screw hole. The crimp portion has an inner diameter smaller than that of the female screw hole, and is forcibly pushed outward and expanded by a bolt-shaped crimp rod inserted.

Furthermore, a press-fit nut described in Patent Literature 2 has a nut fixing portion to be inserted into an attachment hole of the panel. The nut fixing portion has a step portion, a groove portion, and an insertion portion in this order from the top. Screws are formed on the side surfaces of the step portion and the insertion portion. When the insertion portion is inserted into the attachment hole, the insertion portion deforms the side surface portion of the attachment hole, and the deformed material is inserted between the screws. The step portion allows the material of the side surface of the attachment hole to enter the groove portion.

### Citation List

### Patent Literature

[PTL 1] JPH10-252733
[PTL 2] JP2013-113396
[PTL 3] JP2019-056402

### SUMMARY

### Technical Problem

By the way, a method of welding a nut to a plate to be attached has following problems.
1. The female screw portion of the nut is deformed by the heat during welding.
2. Due to thermal expansion of the female screw portion of the nut, the male screw portion of the set tool and the female screw portion of the nut are crimped.
3. Spatter generated when welding other nut adheres to the female screw portion of the nut from which the set tool has been removed.
4. Capital investment for fume collectors or the like is required.
5. Cost for welding wire, CO2 gas, etc. is incurred.
6. It is necessary to manage welding wires, CO2 gas, etc. so as not to run out.

On the other hand, the crimp nut described in Patent Literature 1 and the press-fit nut described in Patent Literature 2 can solve the above-mentioned problems associated with welding since they do not use welding.

However, in the crimp nut described in Patent Literature 1, a base portion of the crimp portion is pushed and bent, and the bent point is weak. Therefore, the crimp nut described in Patent Literature 1 has a drawback that the base portion of the crimp portion is easily damaged when a high torque is applied to the nut after attached.

Further, the press-fit nut described in Patent Literature 2 is attached simply by press-fit. Therefore, the press-fit nut described in Patent Literature 2 has a drawback that the nut after attached is easily loosened when a high torque is applied.

Therefore, according to a crimp nut described in Patent Literature 3, these problems can be solved.

However, when the crimp nut described in Patent Literature 3 is attached to the plate to be attached, an axial crimp force applied to the crimp portion is transmitted inward in the radial direction in the nut portion, and the screw hole of the nut portion may be deformed.

Therefore, the present invention was conceived in view of such circumstances, and an object of the present invention is to provide a crimp nut capable of preventing or restraining deformation of a screw hole of a nut portion.

### Solution to Problem

According to one aspect of the present invention, a crimp nut to be attached to a pilot hole of a plate to be attached is provided, the crimp nut comprising: a nut portion having a screw hole; and a crimp portion extending axially from an end surface of the nut portion so as to be crimped to an inner peripheral surface of the pilot hole,
wherein the crimp portion is formed in a cylindrical shape and in a tapered shape whose outer circumference is reduced in diameter from a base end to a tip end,
an outer peripheral side end surface is formed on a crimp portion side of the nut portion, the outer peripheral side end surface being located on an outer peripheral side of the crimp portion,
an inner peripheral side end surface is formed on the crimp portion side of the nut portion, the inner peripheral side end surface being located on an inner peripheral side of the crimp portion,
an outer rounded portion having an arcuate cross section is formed on a base end portion of the crimp portion to connect an outer peripheral surface of the crimp portion and the outer peripheral side end surface,
an inner rounded portion having an arcuate cross section is formed on the base end portion of the crimp portion to connect an inner peripheral surface of the crimp portion and the inner peripheral side end surface, and
a radius of the outer rounded portion is set larger than a radius of the inner rounded portion.

Preferably, a position of the outer peripheral side end surface in an axial direction is arranged at a tip end side of the crimp portion than the inner peripheral side end surface, or at the same position as the inner peripheral side end surface.

According to the present invention, it is possible to provide a crimp nut capable of preventing or restraining deformation of a screw hole of a nut portion.

### BRIEF DESCRIPTION OF THE DRAWINGS

FIG. 1 is a side view of a crimp nut according to one embodiment of the present invention;
FIG. 2 is a view taken along the line A-A in FIG. 1;
FIG. 3 is a side view showing a state where the crimp nut is crimped;
FIG. 4 is a side view of a crimp nut of a comparative example;
FIG. 5 is a side view of the crimp nut of the comparative example; and
FIG. 6 is a side view of the crimp nut attached to a plate to be attached.

### DESCRIPTION OF THE EXAMPLE EMBODIMENTS

Hereinafter, embodiments of the present invention will be described with reference to the accompanying drawings.

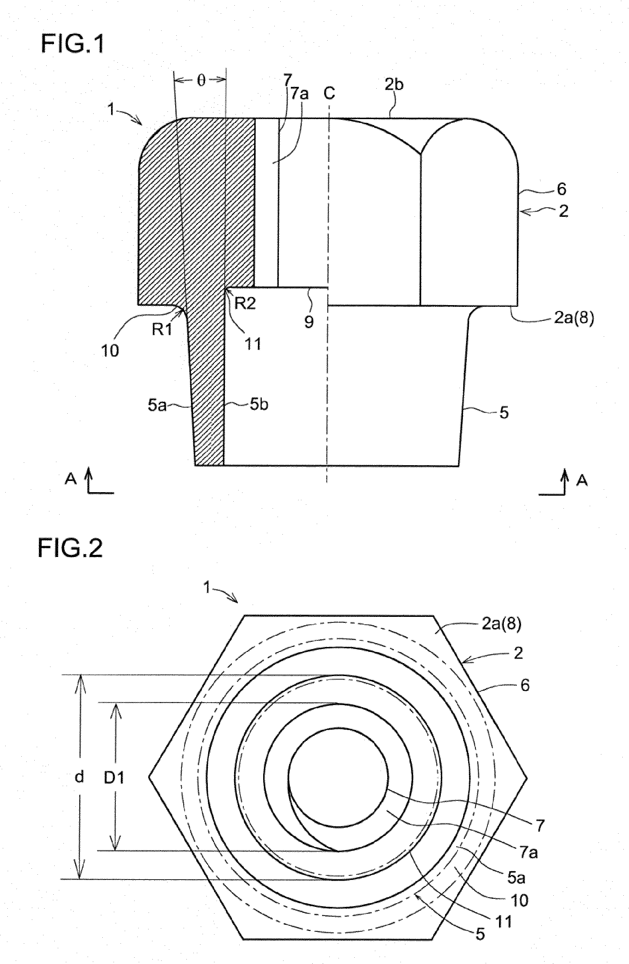

FIG. 1 is a side view of the crimp nut according to the present invention. Alternate long and short dash line in the figure is a central axis C, and the left side of the central axis C shows a cross section of the crimp nut. FIG. 2 is a view taken along the line A-A in FIG. 1 when the crimp nut is viewed from a crimp portion side.

As shown in FIGS. 1, 2 and 3, a crimp nut 1 includes a nut portion 2 and a crimp portion 5. The crimp portion 5 is formed to extend axially from one end surface 2a in the axial direction of the nut portion 2 and is inserted into a pilot or preparatory hole 4 of a plate to be the attached 3.

The nut portion 2 is formed in substantially the same shape as the hexagon nut. Specifically, the nut portion 2 includes a nut main body portion 6 formed in a hexagonal cylinder shape, and a screw hole 7 formed coaxially with the nut main body portion 6. A female screw 7a is formed on an inner peripheral surface of the screw hole 7. Further, on the crimp portion 5 side of the nut portion 2, an outer peripheral side end surface 8 located on the outer peripheral side of the crimp portion 5 is formed, and an inner peripheral side end surface 9 located on the inner peripheral side of the crimp portion 5 is formed. The outer peripheral side end surface 8 constitutes a seating surface to be seated on an attaching surface 3a of the plate to be attached 3.

The crimp portion 5 is formed in a cylindrical shape, and extends from the outer peripheral side end surface 8 and the inner peripheral side end surface 9 of the nut portion 2 in the axial direction of the central axis C. Further, the crimp portion 5 is formed in a tapered shape whose outer circumference is reduced in diameter toward a tip end. An inclination angle θ of the outer peripheral surface with respect to the axial direction of the central axis C may be within a range of approximately 1° or more and 7° or less. It should be noted that each of the above numerical values is merely an example and can be changed as appropriate.

The tip end of the crimp portion 5 is formed to have a diameter smaller than a diameter ϕ of the narrowest portion of the pilot hole 4. An inner diameter d of the crimp portion 5 is formed to be constant over the entire length, and is formed to be larger than a valley diameter D1 of the female screw 7a. Further, an axial length a of the crimp portion 5 is formed longer than an axial length b of the pilot hole 4. When the crimp portion 5 is crimped in the axial direction until it has the same length b as the pilot hole 4 or a length shorter than the pilot hole 4, the crimp portion 5 is crimped to an inner peripheral surface 25 of the pilot hole 4.

On a base end portion of the crimp portion 5, an outer rounded portion 10 having an arcuate cross section is formed to connect an outer peripheral surface 5a of the crimp portion 5 and the outer peripheral side end surface 8. Further, on the base end portion of the crimp portion 5, an inner rounded portion 11 having an arcuate cross section is formed to connect an inner peripheral surface 5b of the crimp portion 5 and the inner peripheral side end surface 9.

The nut portion 2 and the crimp portion 5 are made of rolled steel for general structure. The nut portion 2 and the crimp portion 5 may be formed of other materials generally used for hexagon nut, and may be formed of, for example, a carbon steel material for machine structure, a stainless steel material, or the like.

Further, the plate to be attached 3 is made of a flat steel material. The plate to be attached 3 may be any other plate as long as it has an attaching surface on which the outer peripheral side end surface 8 of the crimp nut 1 is seated. For example, the plate 3 may be made of a channel material used for a chassis frame of a vehicle or the like. Further, material of the plate to be attached 3 is not limited to iron, and may be a resin or a non-ferrous metal.

By the way, in the crimp nut described in Patent Literature 3 (not shown), when the crimp nut is attached to the plate to be attached, an axial crimp force applied to the crimp portion is transmitted inward in the radial direction in the nut portion, and the screw hole of the nut portion may be deformed.

Therefore, in the present embodiment, the radius R1 of the outer rounded portion 10 is set to be larger than the radius R2 of the inner rounded portion 11. Specifically, if the radius R2 of the inner rounded portion 11 is in the range of 0.1 mm or more and 0.5 mm or less, the radius R1 of the outer rounded portion 10 is set to be larger than the radius R2 by 0.3 mm to 1.0 mm.

As a result, it is possible to restrain the axial crimp force applied to the crimp portion 5 from transmitting or flowing inward in the radial direction in the nut portion 2, and to prevent or restrain deformation of the screw hole 7.

Operation of the present embodiment that brings such an effect will be described.

When the crimp nut 1 is attached to the plate 3, first, a pilot hole 4 (pierced hole) is formed in the plate 3 by press working. At this time, on a surface side (shear surface 23 side) facing the punch for press working (not shown), sagging (a phenomenon in which the hole edge is dented over the entire circumference) occurs at the hole edge. Further, hole diameter is enlarged on a surface side (fracture surface 24 side) from which the punch comes out after penetrating the plate 3.

Next, the crimp portion 5 of the crimp nut 1 is inserted into the pilot hole 4 of the plate 3 from the shear surface 23 side. The crimp portion 5 may be inserted from the fracture surface 24 side of the pilot hole 4.

After that, a pin (not shown) is inserted into the crimp portion 5. The pin is used for preventing the crimp portion 5 from being deformed inward in the radial direction. The pin is tightly fitted in the crimp portion 5.

After that, the crimp nut 1 is sandwiched from both sides in the axial direction and pressed in the axial direction.

As a result, axial crimp force is applied to the crimp portion 5, and the crimp force is transmitted in the nut portion 2 in a direction away from the screw hole 7 (outward in the radial direction). Therefore, a component of the crimp force toward the screw hole 7 can be weakened, and the screw deformation and the screw pitch collapse of the nut portion 2 due to the buckling deformation can be prevented or restrained. That is, by setting (radius R1 of the outer rounded portion 10) > (radius R2 of the inner rounded portion 11), the material of the crimp portion 5 that has been compressed and deformed at the time of crimp is guided outward in the radial direction along the outer rounded portion 10. Therefore, deformation and pitch collapse of the screw of the nut portion 2 are prevented or restrained.

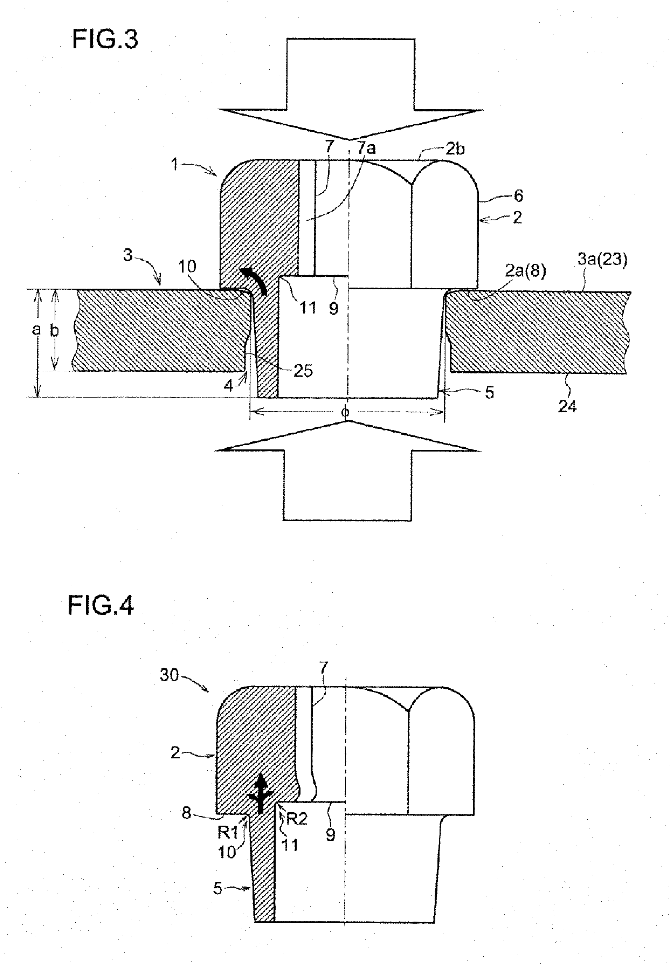

If (radius R1 of the outer rounded portion 10) = (radius R2 of the inner rounded portion 11) as in the crimp nut 30 of the comparative example shown in FIG. 4, the crimp force applied to the crimp portion 5 may be transmitted to the screw hole 7 inward in the radial direction of the nut portion 2, and the screw hole 7 may be deformed so as to protrude inward in the radial direction. However, as described above, the crimp nut 1 according to the present embodiment can transmit the crimp force outward in the radial direction of the nut portion 2. Therefore, the crimp nut 1 according to the present embodiment can prevent or restrain the deformation of the screw hole 7 more than the crimp nut 30 of the comparative example shown in FIG. 4.

Further, as in the crimp nut 1 according to the present embodiment, deflecting the crimp force away from the screw hole 7 of the nut portion 2 and deflecting it radially outward results in directing the crimp force in the axial direction to the inner peripheral surface 25 of the hole 4 of the plate 3. Therefore, adhesion between the inner peripheral surface 25 of the pilot hole 4 and the crimp portion 5 can be enhanced.

Further, the outer peripheral side end surface 8 of the crimp nut 1 according to the present embodiment is arranged at a tip side of the crimp portion 5 than the inner peripheral side end surface 9. As a result, material of the crimp portion 5 that has been compressed and deformed at the time of crimp can easily be transmitted outward in the radial direction along the outer rounded portion 10. Therefore, the screw deformation and the screw pitch collapse of the nut portion 2 are more effectively prevented or restrained.

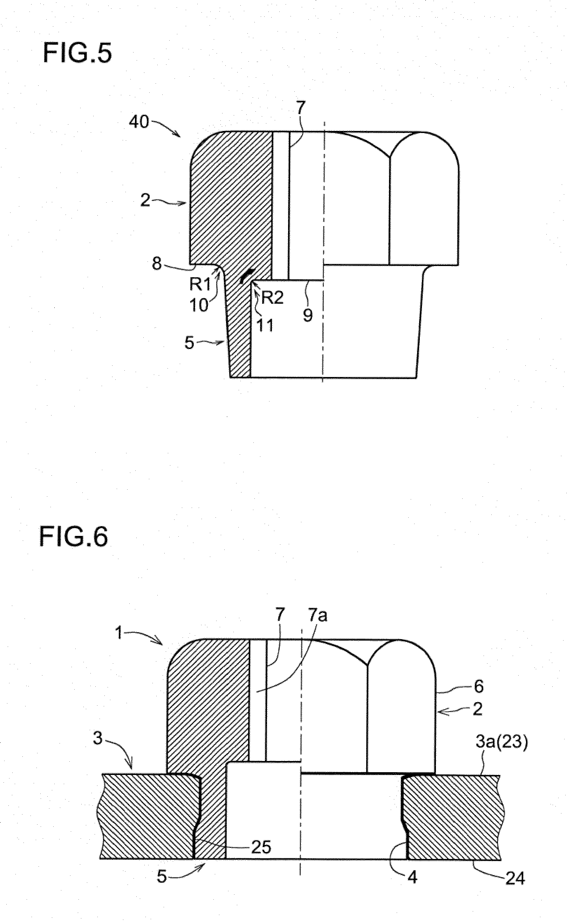

As in the crimp nut 40 of the comparative example shown in FIG. 5, if a position of the inner peripheral side end surface 9 in the axial direction is arranged at the tip end side of the crimp portion 5 than the position of the outer peripheral side end surface 8, the crimp force is easily deflected to a direction to approach the screw hole 7 (inward in the radial direction). In this case, the screw deformation and the screw pitch collapse of the nut portion 2 are likely to occur. However, as described above, the crimp nut 1 according to the present embodiment can transmit the crimp force outward in the radial direction of the nut portion 2. Therefore, the crimp nut 1 according to the present embodiment can prevent or restrain the deformation of the screw hole 7 as compared with the crimp nut 40 of the comparative example shown in FIG. 5, and can prevent or restrain the occurrence of the screw deformation and the screw pitch collapse.

As shown in FIG. 6, in the crimp nut 1 attached to the plate 3, the crimp portion 5 is crushed in the axial direction and enlarged in diameter so as to be firmly crimped to the inner peripheral surface 25 of the pilot hole 4. Furthermore, diameter of the pilot hole 4 is larger on the fracture surface 24 side than on the shear surface 23 side. Therefore, the crimp portion 5 on the fracture surface 24 side has a larger diameter than the crimp portion 5 on the shear surface 23 side, suitably functions as a stopper for the crimp nut 1, and firmly fixes the crimp nut 1 to the plate 3 by sandwiching a part of the plate 3 with the outer peripheral side end surface 8.

## Claims

1. A crimp nut to be attached to a pilot hole of a plate to be attached, comprising:
a nut portion having a screw hole; and
a crimp portion extending axially from an end surface of the nut portion so as to be crimped to an inner peripheral surface of the pilot hole,
wherein the crimp portion is formed in a cylindrical shape and in a tapered shape whose outer circumference is reduced in diameter from a base end to a tip end,
an outer peripheral side end surface is formed on a crimp portion side of the nut portion, the outer peripheral side end surface being located on an outer peripheral side of the crimp portion,
an inner peripheral side end surface is formed on the crimp portion side of the nut portion, the inner peripheral side end surface being located on an inner peripheral side of the crimp portion,
an outer rounded portion having an arcuate cross section is formed on a base end portion of the crimp portion to connect an outer peripheral surface of the crimp portion and the outer peripheral side end surface,
an inner rounded portion having an arcuate cross section is formed on the base end portion of the crimp portion to connect an inner peripheral surface of the crimp portion and the inner peripheral side end surface, and
a radius of the outer rounded portion is set larger than a radius of the inner rounded portion.

2. The crimp nut according to claim 1, wherein:
a position of the outer peripheral side end surface in an axial direction is arranged at a tip end side of the crimp portion than the inner peripheral side end surface, or at the same position as the inner peripheral side end surface.
